# EUROPÄISCHE PATENTANMELDUNG

(11) **EP 0 681 231 A2**
(43) Veröffentlichungstag der Anmeldung: **08.11.1995**
(21) Anmeldenummer: 95106257.9
(22) Anmeldetag: 26.04.1995
(51) Int. Cl.: G05D 5/06

(54) **Messvorrichtung**

(30) Priorität: 02.05.1994 DE 4415152
(71) Anmelder: Widia GmbH, D-45145 Essen (DE)
(72) Erfinder: Grimm, Michael, Dipl.-Ing., D-09246 Pleissa (DE); Eischer, Alexander, Dipl.-Ing., D-91595 Burgoberbach (DE)
(74) Vertreter: Schieferdecker, Lutz, Dipl.-Ing.

(57) **Zusammenfassung**

Die Erfindung betrifft eine Meßvorrichtung mit einem in Richtung von mindestens einer Meßachse (X) geführten Meßtaster (2), dem eine Anzeigevorrichtung (3) zugeordnet ist.

Der Kern der Erfindung besteht darin,
a) daß eine motorisch wirksame Antriebsvorrichtung (8) zum Verstellen des Meßtasters (2) in Richtung der Meßachse (X) bis zum Kontakt mit dem Meßobjekt (7) vorgesehen ist und
b) daß ein elastisches Kraftübertragungselement (9) sowie mindestens ein Schaltelement (10, 11) zum Ausschalten/Steuern der motorischen Antriebsvorrichtung (8) vorgesehen sind.

## Beschreibung

Die Erfindung betrifft eine Meßvorrichtung mit einem in Richtung von mindestens einer Meßachse geführten Meßtaster, dem eine Anzeigevorrichtung zugeordnet ist.

Meßvorrichtungen der genannten Art sind in unterschiedlichster Form und Gestalt bekannt. Bei fast allen ist ferner der erforderliche Arbeitsaufwand beträchtlich, wozu auch gehört, daß die bekannten Meßvorrichtungen jeweils geeicht werden müssen.

Der Erfindung liegt daher die Aufgabe zugrunde, eine besonders leicht zu handhabende Meßvorrichtung zu schaffen.

Zur Lösung dieser Aufgabe sieht die Erfindung vor, daß eine motorisch wirksame Antriebsvorrichtung zum Verstellen des Meßtasters in Richtung der Meßachse bis zum Kontakt mit dem Meßobjekt vorgesehen ist und daß ein elastisches Kraftübertragungselement sowie mindestens ein Schaltelement zum Ausschalten/Steuern der motorisch wirksamen Antriebsvorrichtung vorgesehen sind.

Mit Hilfe der motorischen Antriebsvorrichtung wird der Meßtaster bis zum Kontakt an das Meßobjekt herangefahren, woraufhin der Meßtaster durch Anschlag am Meßobjekt stoppt. Die motorische Antriebsvorrichtung läuft jedoch noch ein Stück weiter, wobei sich das elastische Kraftübertragungselement verformt, bis es zu einem Schaltkontakt kommt. Der Schaltkontakt dient zum Ausschalten der Anriebsvorrichtung und vorzugsweise zum gleichzeitigen Ansteuern einer Bremse. Obwohl die Antriebsvorrichtung auch nach dem Auftreffen des Meßtasters auf das Meßobjekt noch ein kurzes Stück weiterläuft, ist eine exakte Messung und Prüfung der Lage des Meßobjektes durch das zusätzlich vorgesehene, sich elastisch verformende Kraftübertragungselement möglich.

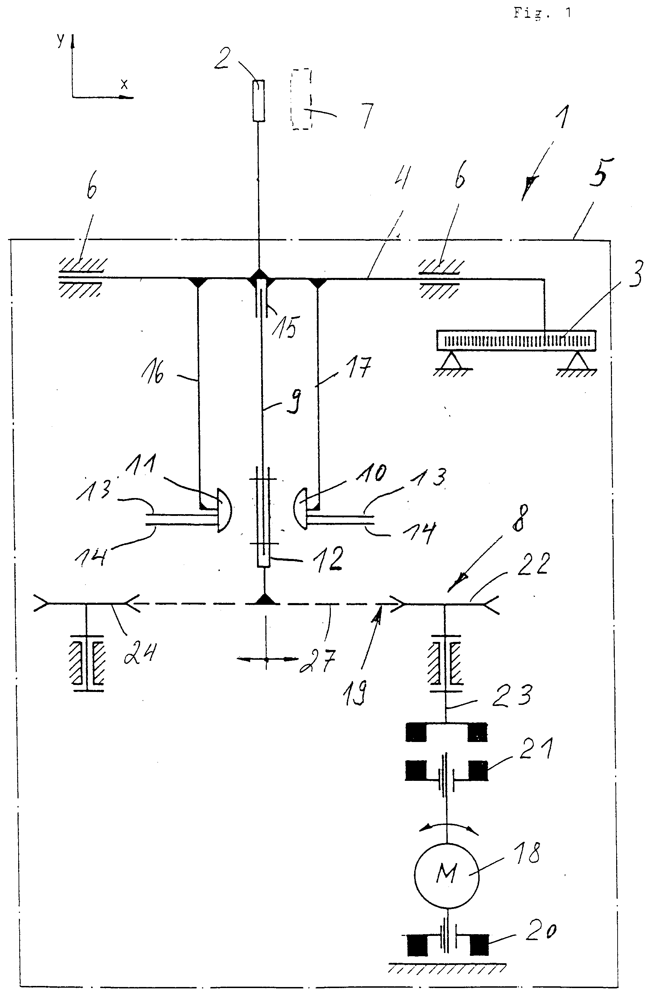

Weitere Merkmale der erfindungsgemäßen Meßvorrichtung, die vor allem beim Messen und Prüfen der Lage von Schneideinsätzen in spanend arbeitenden Werkzeugen Verwendung finden kann, gehen aus Unteransprüchen und der Beschreibung sowie der Zeichnung hervor.

Die Erfindung wird nachstehend anhand eines Ausführungsbeispieles, das in der einzigen Figur rein schematisch dargestellt ist, näher beschrieben.

Eine Meßvorrichtung 1 umfaßt einen in Richtung einer Meßachse X geführten Meßtaster 2, dem eine Anzeigevorrichtung 3 (Inkrementale) zugeordnet ist. Ein mit dem Meßtaster 2 starr verbundenes und ihn tragendes, grundsätzlich bekanntes Führungselement 4 ist im Inneren eines Gehäuses 5 in Richtung der Meßachse X in Lagern 6 geführt und stellt aufgrund seiner Lage in Richtung der X-Achse ein Maß für die Position des Meßtasters 2 dar. An dem Führungselement 4 wird somit zugleich die Lage des Meßtasters 2 abgegriffen bzw. das Führungselement 4 erzeugt Meßimpulse für eine Anzeigevorrichtung 3. Diese Anzeigevorrichtung 3 kann grundsätzlich auch elektronischer Art sein.

Die gesamte Meßvorrichtung 1 wird mit ihrem Gehäuse 5 zunächst in Y-Richtung und auch in Richtung der Meßachse X zum Beispiel von Rand relativ nahe an das Meßobjekt 7 herangefahren. Bei dem Meßobjekt 7 kann es sich zum Beispiel um eine einstellbare Schneidplatte eines spanend arbeitenden Werkzeuges handeln.

Der eigentliche Meßvorgang und das Verstellen des Meßtasters 2 in Richtung der Meßachse X bis zum Kontakt mit dem Meßobjekt 7 erfolgt mit Hilfe einer motorisch wirksamen Antriebsvorrichtung 8.

Die zum Verstellen des Meßtasters 2 erforderliche Kraftübertragung erfolgt von der Antriebsvorrichtung 8 auf den Meßtaster 2 mit Hilfe eines zwischen beiden angeordneten elastischen Kraftübertragungselementes 9. Gemäß Ausführungsbeispiel ist das elastische Kraftübertragungselement 9 eine Blattfeder.

Das elastische Kraftübertragungselement 9 ist gem. Ausführungsbeispiel mit dem Führungselement 4 verbunden und an der Antriebsvorrichtung 8 befestigt. Die Anordnung des elastischen Kraftübertragungselementes 9 zwischen dem Meßtaster 2 und der Antriebsvorrichtung 8 erfolgt dabei ferner in der Weise, daß die mögliche, elastische Verformung in Richtung der X-Achse erfolgt.

Ferner ist mindestens ein bzw. vorzugsweise gem. Ausführungsbeispiel sind zwei Schaltelemente 10, 11 dem elastischen Kraftübertragungselement 9 zugeordnet und dienen zum Ausschalten bzw. zum Steuern der motorischen Antriebsvorrichtung 8.

Wenn die motorische Antriebsvorrichtung 8 beim Messen oder Prüfen mit Hilfe des elastischen Kraftübertragungselementes 9 den Meßtaster 2 in Richtung der Meßachse X bewegt und der Meßtaster 2 schließlich das Meßobjekt 7 berührt, ist eine Weiterbewegung des Meßtasters 2 und des Führungselementes 4 nicht mehr möglich. Gleichzeitig erfolgt eine Echtzeitmessung. Diese Messung erfolgt unabhängig von der Antriebsvorrichtung 8, die noch weiterlaufen kann, während sich das elastische Kraftübertragungselement 9 verformt.

Diese Verformung erreicht schließlich einen solchen Grad, daß das elastische Kraftübertragungselement 9 entweder selbst oder ein zu seiner Befestigung an der Antriebsvorrichtung 8 dienendes Halteteil 12 bei einer Bewegung des Meßtasters 2 nach rechts das Schaltelement 10 und bei einem Meßvorgang nach links in der einzigen Figur das Schaltelement 11 berührt oder jeweils in eine solche Nähe kommt, daß auch ein berührungsfreier Schaltvorgang möglich ist. Die Schaltelemente 10 bzw. 11 sind berührungslos oder berührend arbeitende Schaltkontakte mit der Folge, daß ein zum Ausschalten bzw. zum Steuern der motorischen Antriebsvorrichtung 8 dienender Strom fließt.

Die beiden Schaltelemente 10 und 11 sind vorzugsweise Induktionsschalter. Sie können aber auch optische Schalter sein, die mit Hilfe von elektrischen bzw. optischen Leitern 13 und 14 an einen in der einzigen Figur nicht näher dargestellten Schaltkreis zur Steuerung der Antriebsvorrichtung 8 angeschlossen sind.

Der Auslenkweg für das elastische Kraftübertragungselement 9 beträgt in der Praxis beispielsweise 4 mm bei einer Meßkraft von 1 N (Newton). Die Länge des als Blattfeder ausgestalteten elastischen Kraftübertragungselementes liegt in einer Größenordnung von 40 bis 50 mm.

Zur Verbindung des elastischen Kraftübertragungselementes 9 mit dem Führungselement 4 bzw. dem Meßtaster 2 dient eine spielfreie Gabel 15.

Zu beiden Seiten der spielfreien Gabel 15 sind in Bewegungsrichtung des Meßtasters 2 bzw. in Verformungsrichtung des Kraftübertragungselementes 9 jeweils die Schaltelemente 10 bzw. 11 auf Trägern 16 bzw. 17 angeordnet. Die Lage der Träger 16 und 17 ist so gewählt, daß sich die Schaltelemente 10 bzw. 11 in einem kurzen Abstand von z.B. 4 mm von dem der Gabel 15 abgewandten Ende des blattfederförmigen Kraftübertragungselementes 9 befinden, wobei die Träger 16 bzw. 17 an dem Führungselement 4 angeordnet und zusammen mit diesem bewegbar sind.

Auch das Halteelement 12 ist gabelförmig und erstreckt sich gem. Ausführungsbeispiel bis auf das. Niveau der beiden Schaltelemente 10 und 11.

Die Antriebsvorrichtung 8 umfaßt einen rechts- und linksdrehenden Elektromotor 18, der zum Antrieb eines Riementriebes 19 dient. Ferner sind eine Bremse 20 und eine Kupplung 21 vorgesehen, die sich zwischen dem Elektromotor 18 und dem Riementrieb 19 befindet. Bei dem Riementrieb 19 handelt es sich vorzugsweise um einen Zahnriemen mit einem Antriebsrad 22 auf einer zum Elektromotor 18 führenden Antriebswelle 23 und mit einer Spann- und Umlenkrolle 24. Das Antriebsrad 22 und die Spann- und Umlenkrolle 24 sind in Lagern 25 bzw. 26 gelagert.

Das Halteteil 12 für das elastische Kraftübertragungselement 9 ist mit dem einen Trum 27 des Riementriebes 19 verbunden. Die Anordnung des Riementriebes 19 bzw. die Laufrichtung des Trum 27 ist dabei in Richtung der jeweiligen Auslenkung des blattfederförmigen Kraftübertragungselementes 9 gewählt und liegt somit ebenfalls in Richtung der Meßachse X.

Die Meßvorrichtung 1 gewährleistet eine exakte Messung und Prüfung mit hoher Wiederholgenauigkeit. Sie setzt ein Eichen nicht voraus und ist robust und zuverlässig. Auch bei einer Lageänderung des Meßobjektes 7 im Bereich von Bruchteilen eines Millimeters, wie dies zum Beispiel beim Einstellen einer Wendeschneidplatte vorkommt, ist die Meßkraftänderung vernachlässigbar. Dies bedeutet, daß Echtzeitmessungen durchgeführt werden können.

Die Erfindung ist nicht auf das in der Figur dargestellte Ausführungsbeispiel beschränkt, zumal es sich bei der einzigen Figur auch nur um eine Prinzipskizze handelt. Wesentlich ist, daß zwischen dem Meßtaster 2 und den zum Anzeigen der Lage des Meßtasters 2 dienenden Mitteln wie zum Beispiel der Anzeigevorrichtung 3 einerseits und der Antriebsvorrichtung 8 andererseits ein elastisches Zwischenglied angeordnet ist, welches die Bewegung der Antriebsvorrichtung 8 auf den Meßtaster 2 überträgt und mit Hilfe von ferner vorgesehenen Schaltelementen 10, 11 die Antriebsvorrichtung 8 abschaltet, sobald der Meßtaster 2 das Meßobjekt 7 berührt.

Die Schaltelemente 10, 11 sind starr mit dem Führungselement 4 verbunden, ebenso wie der Meßtaster 2 starr mit dem Führungselement 4 verbunden ist.

Die Meßvorrichtung 1 gestattet auch eine Änderung und Erfassung der Meßwerte nach dem Stillstand der Antriebsvorrichtung 8, so daß eine Echtzeitmessung möglich ist.

Wird der Meßtaster 2 z.B. an ein einstellbares Meßobjekt 7 (Wendeschneidplatte) bewegt und schaltet die Antriebsvorrichtung 8 bei einer vorgegebenen Auslenkung des elastischen Kraftübertragungselementes 9 ab, so wird der Meßwert angezeigt. Wird nunmehr die Lage des Meßobjektes 7, wie dies im Falle einer Wendeschneidplatte geschieht, verändert, so ändert sich in gleichem Maße der angezeigte Wert der Meßvorrichtung 1. Eine derartige Anzeige ist beim Stand der Technik nicht möglich.

Der Meßtaster 2 bzw. die gesamte Meßvorrichtung 1 werden zu Beginn eines Meßvorganges in der Regel von Hand an das Meßobjekt 7 heranbewegt. Zu diesem Zeitpunkt ist die Antriebswelle 23 mit Hilfe der Kupplung 21 ausgekuppelt. Erst dann wird der Elektromotor 18 zugeschaltet, wobei die Antriebsvorrichtung 8 nur dazu dient, eine bedienungsunabhängige, reproduzierbare Meßkraft zu erzeugen.

Der Meßtaster 2 und das Führungselement 4 zusammen mit den Trägern 16 und 17 und den zugehörigen Schaltelementen 10, 11 bilden eine starre Einheit, wobei parallel zum Führungselement 4 sowie ortsfest ein Lagedetektor in Gestalt der Anzeigevorrichtung 3 gemäß Ausführungsbeispiel vorgesehen ist. Es versteht sich, daß die Anzeigevorrichtung 3 gemäß Ausführungsbeispiel nur den Grundgedanken wiedergibt und keine Beschränkung beinhaltet, denn es ist grundsätzlich möglich, die Position des Meßtasters 2 in Richtung der zu messenden Achse auch mit Hilfe eines anderen Lagedetektors zu ermitteln.

Der Antrieb des Meßtasters 2 ist aufgrund des elastischen Kraftübertragungselementes 9 "schwimmend".

Der Meßtaster 2 ist schließlich starr mit den Schaltelementen 10, 11 und elastisch verformbar mit dem Antrieb bzw. mit der Antriebsvorrichtung 8 verbunden, wobei die elastische Verformung zum Ausschalten der Antriebsvorrichtung 8 dient.

## Patentansprüche

1. Meßvorrichtung mit einem in Richtung von mindestens einer Meßachse (X) geführten Meßtaster (2 ), dem eine Anzeigevorrichtung ( 3 ) zugeordnet ist,
dadurch gekennzeichnet,
a) daß eine motorisch wirksame Antriebsvorrichtung ( 8 ) zum Verstellen des Meßtasters ( 2 ) in Richtung der Meßachse (X) bis zum Kontakt mit dem Meßobjekt ( 7 ) vorgesehen ist und
b) daß ein elastisches Kraftübertragungselement (9) sowie mindestens ein Schaltelement (10,11) zum Ausschalten/Steuern der motorischen Antriebsvorrichtung (8) vorgesehen sind.

2. Meßvorrichtung nach Anspruch 1, dadurch gekennzeichnet, daß das elastische Kraftübertragungselement (9) zwischen dem Meßtaster (2) und den zum Anzeigen der Lage des Meßtasters (2) dienenden Mitteln/Anzeigevorrichtung (3) einerseits und der zum Verstellen des Meßtasters (2) dienenden motorischen Antriebsvorrichtung (8) andererseits angeordnet ist.

3. Meßvorrichtung nach einem oder mehreren der vorhergehenden Ansprüche, dadurch gekennzeichnet, daß zwei Schaltelemente (10, 11) dem elastischen Kraftübertragungselement (9) zugeordnet und auf gegenüberliegenden Seiten sowie jeweils im geringen Abstand von dem Kraftübertragungselement (9) angeordnet sind.

4. Meßvorrichtung nach einem oder mehreren der vorhergehenden Ansprüche, dadurch gekennzeichnet, daß das Schaltelement (10, 11) ein elektrischer/optischer Schaltkontakt ist und zum Stoppen der motorischen Antriebsvorrichtung (8) dient.

5. Meßvorrichtung nach einem oder mehreren der vorhergehenden Ansprüche, dadurch gekennzeichnet, daß das Schaltelement (10, 11) ein berührungslos bzw. berührend arbeitender Schaltkontakt ist.

6. Meßvorrichtung nach einem oder mehreren der vorhergehenden Ansprüche, dadurch gekennzeichnet, daß das Kraftübertragungselement ( 9 ) eine Blattfeder ist.

7. Meßvorrichtung nach einem oder mehreren der vorhergehenden Ansprüche, dadurch gekennzeichnet, daß die motorische Antriebsvorrichtung ( 8 ) einen Elektromotor ( 18 ) mit einer zugeordneten Bremse (20) umfaßt.

8. Meßvorrichtung nach einem oder mehreren der vorhergehenden Ansprüche, dadurch gekennzeichnet, daß die motorische Antriebsvorrichtung ( 8 ) einen Riementrieb ( 19 ) zum Verstellen des Meßtasters ( 2 ) umfaßt.

9. Meßvorrichtung nach einem oder mehreren der vorhergehenden Ansprüche, dadurch gekennzeichnet, daß die Schaltelemente (10, 11) an einem den Meßtaster (2) in Richtung der Meßachse (X) führenden Führungselement (4) angeordnet sind.

10. Meßvorrichtung nach einem oder mehreren der vorhergehenden Ansprüche, dadurch gekennzeichnet, daß das elastische Kraftübertragungselement (9) einerseits an dem einen Trum (27) des Riementriebes (19) angeordnet und andererseits mit dem den Meßtaster (2) tragenden Führungselement (4) verbunden ist.

11. Meßvorrichtung mit einem in Richtung von mindestens einer Meßachse (X) bewegbaren Meßtaster (2), dem eine Anzeigevorrichtung (3) zugeordnet ist, dadurch gekennzeichnet, daß der Meßtaster (2) geführt ist und starr mit Schaltelementen (10, 11) verbunden ist und mit Hilfe eines elastisch verformbaren Kraftübertragungselementes (9) mit einem Antrieb bzw. mit einer Antriebsvorrichtung (8) verbunden ist und daß die elastische Verformung zum Ausschalten des Antriebes dient.
